Europäisches Patentamt

European Patent Office

Office européen des brevets

(19)

(11) **EP 0 899 922 A2**

(12) **EUROPÄISCHE PATENTANMELDUNG**

(43) Veröffentlichungstag:
   **03.03.1999 Patentblatt 1999/09**

(51) Int Cl.6: **H04L 27/144**

(21) Anmeldenummer: **98890255.7**

(22) Anmeldetag: **31.08.1998**

(84) Benannte Vertragsstaaten:
   **AT BE CH CY DE DK ES FI FR GB GR IE IT LI LU
   MC NL PT SE**
   Benannte Erstreckungsstaaten:
   **AL LT LV MK RO SI**

(30) Priorität: **29.08.1997 AT 1452/97**

(71) Anmelder: **Institut für Nachrichtentechnik und
   Hochfrequenztechnik der Technischen
   Universität Wien
   1040 Wien (AT)**

(72) Erfinder: **Molisch, Andreas F., Dipl.-Ing. Dr.
   1040 Wien (AT)**

(74) Vertreter: **Weinzinger, Arnulf, Dipl.-Ing. et al
   Patentanwälte
   Sonn, Pawloy, Weinzinger & Wolfram
   Riemergasse 14
   1010 Wien (AT)**

(54) **Robuster Empfänger für frequenzgetastete Signale**

(57) Beschrieben wird ein Empfänger für FSK-Signale mit einem Eingangskreis (5,6,7,8,9), einem die Momentanfrequenz erfassenden Frequenzdetektor (30, 30') und einem Verarbeitungsschaltkreis, z.B. einem Entscheider (60), wobei das empfangene Signal vor der Zuführung zum Verarbeitungsschaltkreis hinsichtlich seiner Momentanfrequenz begrenzt wird; hierzu wird beispielsweise das Ausgangssignal des Frequenzdetektors (30) einem Begrenzer (40; 40') zugeführt, der die Signalamplitude begrenzt, oder es wird ein Frequenzdetektor (30') mit einer die Momentanfrequenz begrenzenden nichtlinearen Kennlinie vorgesehen.

Fig. 3a

**Beschreibung**

Die Erfindung betrifft einen Empfänger gemäß dem einleitenden Teil von Anspruch 1. Angestrebt wird dabei eine Ausbildung, die eine geringe Anfälligkeit für Fehler besitzt, die von Nachbarzeichenstörung (Intersymbolinterferenz, ISI) herrühren. Anwendungen für diesen Empfänger ergeben sich für alle Nachrichtensysteme, in denen ISI auftritt, besonders überall dort, wo Mehrwegeausbreitung zu zeitlich variabler Intersymbolinterferenz führt, also etwa im zellularen Mobilfunk sowie in Schnurlostelefonen.

Im Mobilfunk eingesetzte Empfänger für frequenzgetastete Signale (FSK-Signale- Frequency Shift Keying -Signale) beruhen meist auf einem von zwei Prinzipien:

- Für den Spezialfall der MSK-Signale (Minimum Shift Keying; Modulationsindex h=0,5) kann ein Vergleich der Empfangssignalphasen an zwei aufeinanderfolgenden Abtastpunkten vorgenommen werden: falls die Differenz der beiden Phasen (modulo $2\pi$) zwischen 0 und $\pi$ liegt, wird entschieden, daß eine "+1" gesendet wurde; andernfalls wird entschieden, daß eine "-1" gesendet wurde. Diese Technik wird z.B. in dem Artikel I. Crohn, G. Schultes, R. Gahleitner, and E. Bonek, "Irreducible error performance of a digital portable communication system in a controlled time-dispersion indoor channel", IEEE J. Select. Areas Comm. vol. SAC-11, pp. 1024-1033, 1993, beschrieben. Ein solcher Empfänger wird differentieller Empfänger genannt.
- Im allgemeinen Fall wird das Eingangssignal, gegebenenfalls nach einer Filterung, einem Frequenzdetektor zugeführt. Dieser liefert ein Ausgangssignal, das der Momentanfrequenz des Empfangssignals proportional ist. Dieses Ausgangssignal wird dann gefiltert (z.B. in einem Tiefpaßfilter oder in einem sog. Integrate-and-dump-Filter) und abgetastet. Aufgrund der Größe des Abtastwertes wird entschieden, welches Bit gesendet wurde. Diese Anordnung, z.B. beschrieben in F. Adachi and J. D. Parsons, "Error rate performance of digital FM mobile radio with postdetection diversity"; IEEE Trans. Comm., vol. 37, pp. 200-210, 1989, wird im Folgenden als Frequenzentscheider bezeichnet.

Diese bekannten Techniken sind gut geeignet, wenn der Kanal zu keinen Phasenverzerrungen des Signals führt, sondern das Signal nur dämpft und Rauschen hinzufügt. In einem zeitdispersiven Kanal kommt es aber zu unterschiedlichen Gruppenlaufzeiten bei den verschiedenen Frequenzen im übertragenen Band. Unterschiedliche Gruppenlaufzeiten sind jedoch eindeutig mit Phasenverzerrungen und Verzerrungen der Momentanfrequenz gekoppelt, was sich in ISI-Fehlern äussert. Zeitlich treten diese Verzerrungen besonders in der Nähe von Übergängen von einem Symbol zum nächsten auf, wie in dem vorstehenden Artikel von Crohn et al. beschrieben ist. Das ist nun gerade dann besonders verhängnisvoll, wenn in der Nähe dieser Symbolübergänge das Empfangssignal abgetastet wird, um zu entscheiden, ob eine "+1" oder eine "-1" gesendet wurde. Wird nachträglich im Frequenzbereich stark gefiltert, so breiten sich die gestörten Symbolübergänge noch zeitlich über größere Teile der Symboldauer aus. Solche ISI-verursachten Fehler sind besonders in Schnurlostelephonen bedeutsam, da dort aus Kostengründen keine Entzerrer eingesetzt werden sollen. Es ist bekannt, siehe z.B. J.C.I. Chuang, "The effects of time rms delay spread on portable radio communications channels with digital modulation", IEEE J. Select. Areas Comm., vol. SAC-5, pp. 879-889, 1987, daß die durch ISI versuchte Fehlerwahrscheinlichkeit $P_e$ ungefähr

$$P_e = K(S/T)^2$$

ist. Dabei ist S die Verzögerungsverbreiterung (delay spread), berechnet aus der Wurzel des zweiten zentralen Moment des Quadrates des Betrages der mittleren Kanalimpulsantwort; T ist die Symboldauer; und K ist eine Konstante der Größenordnung eins. Die Verzögerungsverbreiterung ist eine unmittelbare Konsequenz der Mehrwegeausbreitung und darf, wie aus dem Erfordernis einer Fehlerwahrscheinlichkeit für gute Sprachverständlichkeit von unter 0,001 hervorgeht, etwa 10 - 20% der Symboldauer nicht überschreiten.

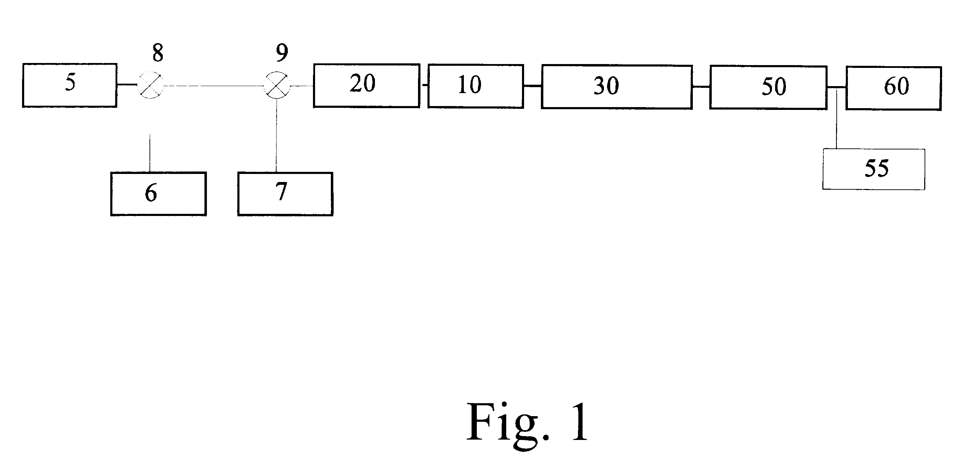

Ein Beispiel einer an sich bekannten Frequenzentscheider-schaltung ist in Fig. 1 zu sehen. Die im Folgenden angegebenen Ausführungsformen beziehen sich beispielhaft auf einen Empfänger für den DECT (Digital Enhanced Cordless Telephone)-Schnurlostandard, sind aber an sich selbstverständlich im Prinzip nicht auf einen solchen Empfänger beschränkt.

Das Empfangssignal der Schaltung gemäß Fig. 1 hat eine mögliche Mittenfrequenz von 1 897 344-N* 1 728 kHz, wobei N eine ganze Zahl zwischen 0 und 9 ist. In einem Eingangskreis mit einem Hochfrequenzbandpaßfilter 5 werden zunächst die Empfangsfrequenzen außerhalb des Bandes 1 880-1 900 MHz eliminiert; anschließend wird das Signal mittels eines lokalen Oszillators 6 mit einstellbaren Frequenzen 1 786 752-N* 1 728 bei 8 auf eine fixe Zwischenfrequenz von 110 592 kHz heruntergemischt; mit einem zweiten lokalen Oszillator 7 wird bei 9 auf eine Zwischenfrequenz von 10,7 MHz heruntergemischt. Spiegelfrequenzen werden durch ein Prä-Detektionsfilter 20 eliminiert; in diesem Prä-Detektionsfilter 20 wird auch eine Kanalselektion vorgenommen. Dieses Prä-Detektionsfilter 20 ist also ein Bandpaßfilter mit einer Bandbreite von z.B. 1,2 MHz (BT=0,5), und es werden hier Nachbarkanalstörungen und Rauschen verringert. Die Leistungsschwankung des nun auf der Zwischenfrequenz befindlichen Signals kann optional mittels einer einfachen, z.B. automatischen Verstärkungsregelung (AGC-Regelung, automatic gain control) reduziert werden, was in Fig. 1 nicht weiter veranschaulicht ist, und anschließend wird das Signal einem Begrenzer-Verstärker 10 zugeführt, der eine konstante Einhüllende des Signals erzwingt. Die Leistung des ursprünglichen Empfangssignals schwankt typischerweise zwischen -40 und -80dBm. Falls keine AGC verwendet wird, sollte die Verstärkung des Begrenzer-Verstärkers 10 mindestens 80dB betragen; falls eine AGC verwendet wird, kann die Verstärkung um den Dynamikbereich der AGC verringert werden. Das so erhaltene Constant-modulus-Signal (Leistung rund -10 bis -3dBm) geht nun in einen FM/AM-Konverter, nämlich den Frequenzdetektor 30 in Fig. 1, wo die Momentanfrequenz, die die Information trägt, in Amplitudenwerte umgewandelt wird.

Dieser FM/AM-Konverter 30 kann z.B. als Flankendemodulator, wie in H. Weidenfeller, A. Vlcek, "Digitale Modulationsverfahren mit Sinusträger", Springer, Berlin, 1996, beschrieben, realisiert sein. Dabei wird, wie in dieser Literaturstelle betont wird, auf die Linearität der FM/AM-Konversion großer Wert gelegt. Eine alternative Realisierung wird z.B. im integrierten Schaltkreis SA636 der Firma Philips Semiconductor verwendet: dabei wird das amplitudenbegrenzte Signal mit einer phasenverschobenen Version seiner selbst multipliziert; die Größe der Phasenverschiebung hängt dabei von der Frequenz ab. Anschließend folgt eine Amplitudendetektion, wie sie z.B. in der Schrift Hewlett-Packard Application Note 923, "Schottky Barrier Diode video detectors" angegeben wird. Auch in diesem Fall hat dann das Ausgangssignal eine Amplitude, die der Empfangsfrequenz proportional ist.

Dieses Signal wird nun beispielsweise einem Post-Detektionsfilter 50 zugeführt. Bei diesem Post-Detektionsfilter 50 kann es sich um ein Integrate-and-dump-Filter handeln, wie es z.B. in U. Tietze and Ch. Schenk "Halbleiterschaltungstechnik", Springer, Berlin, 5. Auflage, 1980, beschrieben wird. Es wird während einer Symboldauer T (0,868μs) die ankommende Spannung aufintegriert. Am Ende der Integration erfolgt das Auslesen des aufintegrierten Wertes und die Entladung der im Integrator vorhandenen Kapazitäten, damit für die nächste Integrationsperiode mit dem Wert 0 als Startwert begonnen wird. Die Entladung der Kapazitäten muß sehr rasch erfolgen (schneller als 10ns). Anstelle des Integrate-and-dump- Filters kann auch ein gewöhnliches Tiefpaßfilter verwendet werden. Die Impulsantwort dieses Filters sollte so gut wie möglich einen Rechteckimpuls der Länge 0,868μs annähern; Abweichungen von dieser Charakteristik bewirken eine Erhöhung der Fehlerwahrscheinlichkeit.

Der Ausgang dieses Filters 50 wird einem Verarbeitungsschaltkreis zugeführt und dabei im Symboltakt abgetastet, vgl. auch die Abtast- bzw. Taktgeberschaltung 55 in Fig. 1. Die Wahl des Abtastzeitpunktes ist - sowohl für eine Ausführung des Filters 50 als Integrate-and-dump Filter auch für eine solche als Tiefpaßfilter - in einem zeitdispersiven Kanal ein Problem, für das in der Vergangenheit verschiedene Lösungsansätze vorgeschlagen wurden. Ein Überblick über diese Methoden wird in der Druckschrift A.F. Molisch, "Bit error probabilities of cordless telephones", COST 259, TD(98) 46, gegeben.

Das so abgetastete Signal kann nun auf beliebige Art weiterverarbeitet werden; so kann es z.B. einem Entscheider 60 zugeführt werden, in dem festgestellt wird, ob der abgetastete Wert über oder unter einem vorgegebenen Schwellwert liegt. Entsprechend dieser Entscheidung wird dann angenommen, daß das gesendete Bit "+1" oder "-1" war.

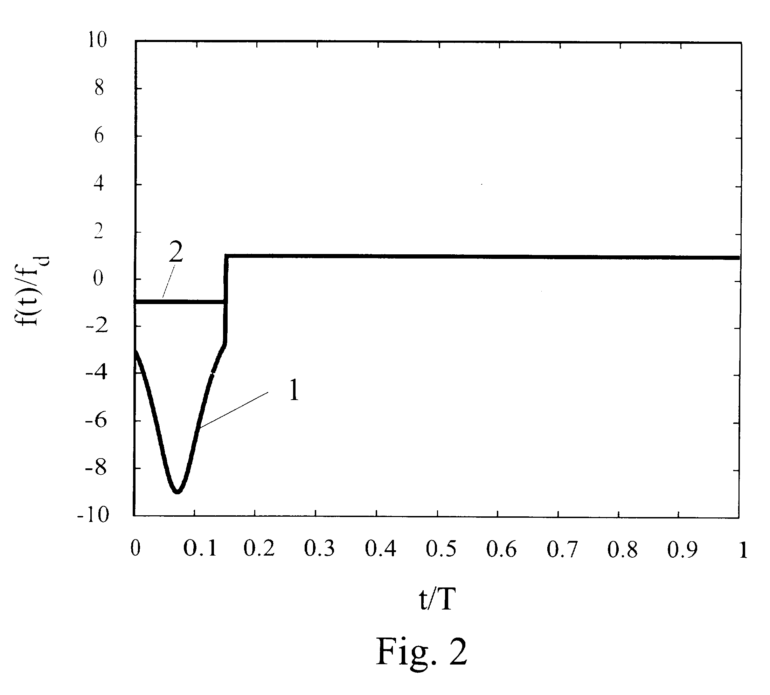

Bei solchen FSK-Signal-Empfängern, wie vorstehend anhand der Fig. 1 beispielsweise erläutert, treten immer wieder Fehler auf, die auf ISI (Intersymbolinterferenz), also Nachbarzeichenstörung, auf Grund von Signalechos, zurückzuführen sind. Dies soll nachstehend an Hand der Fig. 2 erläutert werden, die die Momentanfrequenz $f(t)$ normiert auf den Frequenzhub $f_d$ als Funktion der normierten Zeit $t/T$ für eine Bitkombination -1+1+1 und für den Fall von ungefilterten FSK-Signalen mit einem Modulationsindex $h=0,7$ zeigt. Beispielhaft wird ein Kanal mit einer normierten Kanalimpulsantwort $h(t)=\delta(t) +c\delta (t+\tau_2)\exp(j\varphi_0)$ angenommen. Dabei bedeuten $\delta(t)$ die Dirac'sche Sprungfunktion; $\tau_2$ die Verzögerung des zweiten Pfades gegenüber dem ersten; $c$ die normierte Amplitude; und $\varphi_0$ die normierte Phasenverschiebung des zweiten Pfades. In Fig. 2 werden die Werte $\tau_2=0,6$, $c=1$, $\varphi_0=1,1\pi$ angenommen. Die Amplitude des Ausganges des Frequenzdetektors (30 in Fig. 1) weist dann für bestimmte Werte von $\varphi_0$ sowie für bestimmte Bitkombinationen starke Schwankungen auf. Der starke Anteil an negativen Frequenzen, der im linken Teil der Kurve 1 in Fig. 2 zu sehen ist, führt dazu, daß das Integral über die Momentanfrequenz negativ ist. Am Ausgang eines beispielsweise als Post-Detektionsfilters 50 (s.Fig.1) vorgesehenen Integrate-and-dump-Filters erhielte man somit zum Abtastzeitpunkt einen negativen Wert, was den Entscheider (60 in Fig. 1) zu einer falschen Entscheidung veranlassen würde.

Der Erfindung liegt nun die Aufgabe zugrunde, die ISI-verursachte Fehlerwahrscheinlichkeit in Empfängern der hier in Rede stehenden Art, insbesondere in Mobilfunk- und Schnurlostelefonsystemen, mit einfachen Schaltungsmaßnahmen zu verringern, ohne daß hiefür aufwendige Entzerrer oder dergl. erforderlich wären.

Diese Aufgabe wird mit den in Anspruch 1 angegebenen Merkmalen gelöst. Vorteilhafte Ausführungsformen und Weiterbildungen sind Gegenstand der Unteransprüche.

Der Erfindung liegt somit das Konzept zugrunde, im bzw. nach dem Frequenzdetektor (vor einem etwaigen Tiefpaßfilter bzw. Integrate-and-dump-Filter) eine Begrenzung der Signalamplitude vorzusehen, wobei von der Überlegung ausgegangen wird, daß im Sendesignal keine Momentanfrequenzen außerhalb des Bereiches $[-f_d, f_d]$ auftreten; für eine binäre FSK gilt $f_d=h/T$.

Deshalb müssen alle Frequenzen, die außerhalb dieses Bereiches liegen, Artefakte des Kanals sein. Diese werden durch die erfindungsgemäße Begrenzung vollständig eliminiert bzw. zumindest weitgehend vermindert.

Mit der Erfindung lassen sich für reine FSK (ohne Filterung vor dem Frequenzdetektor) die Fehler aufgrund der ISI vollkommen eliminieren. In der Praxis wird allerdings in der Regel eine vorherige Filterung notwendig sein, um Nachbarkanalstörungen und Rauschen zu eliminieren. Durch eine solche Filterung ist die Eliminierung der ISI-verursachten Fehler nicht mehr vollständig, sondern es verbleibt eine Fehlerrate der Form $P_e=K(S/T)^2$. Allerdings ist hier die Proportionalitätskonstante K deutlich kleiner, verglichen mit den Werten ohne erfindungsgemäße Begrenzung; typische Werte liegen (je nach Filterbandbreite) zwischen 0,01 und 0,1. Falls also eine vorherige Filterung eingesetzt wird, führt die Erfindung zwar nicht zu einer vollständigen Eliminierung der ISI-verursachten Fehlerrate, aber doch zu einer beträchtlichen Verringerung (um Größenordnungen geringer) gegenüber herkömmlichen Detektoren. Eine genauere Berechnung der Fehlerwahrscheinlichkeit, die zum Entwurf von Empfangsfiltern zweckmäßig ist, wird nachfolgend noch näher erläutert werden.

Die Erfindung wird nachfolgend an Hand von in der Zeichnung veranschaulichten bevorzugten Ausführungsbeispielen, auf die sie jedoch nicht beschränkt sein soll, noch weiter erläutert. Im einzelnen zeigen in der Zeichnung:

Fig. 1 eines Teiles eines FSK-Signal-Empfängers bzw. einer Frequenzentscheider-Schaltung eines solchen Empfängers gemäß Stand der Technik, wobei diese Schaltung bereits vorstehend erläutert wurde;

Fig. 2 ein Diagramm zur Veranschaulichung der Momentanfrequenz f(t), normiert auf den Frequenzhub $f_d$, über der Zeit t, normiert auf die Symboldauer T, wobei eine Kurve (Kurve 1) die Situation bei einem Empfänger gemäß Stand der Technik und eine andere Kurve (Kurve 2) die Situation beim erfindungsgemäßen Empfänger veranschaulicht;

Fig. 3a ein Blockschaltbild vergleichbar jenem gemäß Fig. 1 zur Veranschaulichung einer erfindungsgemäßen Ausbildung;

Fig. 3b eine Empfängerschaltung ähnlich jener gemäß Fig. 3a, wobei aber nun die Funktion des Begrenzers der Empfängerschaltung gemäß Fig. 3a in einem entsprechend adaptierten Frequenzdetektor implementiert ist;

Fig. 3c eine Empfängerschaltung ähnlich jener gemäß Fig. 3a mit einer Ausführung des Begrenzers mit der nachfolgenden Schaltstufe in digitaler Form;

Fig. 4 eine beispielhafte Ausführung eines Begrenzers, wie er im Empfänger gemäß Fig. 3a eingesetzt werden kann;

Fig. 5 in einem Diagramm eine ideale Kennlinie für den Begrenzer sowie eine diese ideale Begrenzung annähernde Kennlinie in Form einer arctan-Funktion;

Fig. 6 eine nicht-lineare Kennlinie eines Frequenzdetektors in der Ausführung gemäß Fig. 3b, und

Fig. 7 in einem Diagramm auf Basis von Rechnersimulationen ermittelte Wahrscheinlichkeiten für ISI-verursachte Fehler im Fall von herkömmlichen Empfängerschaltungen bzw. im Fall von Empfängern gemäß der Erfindung.

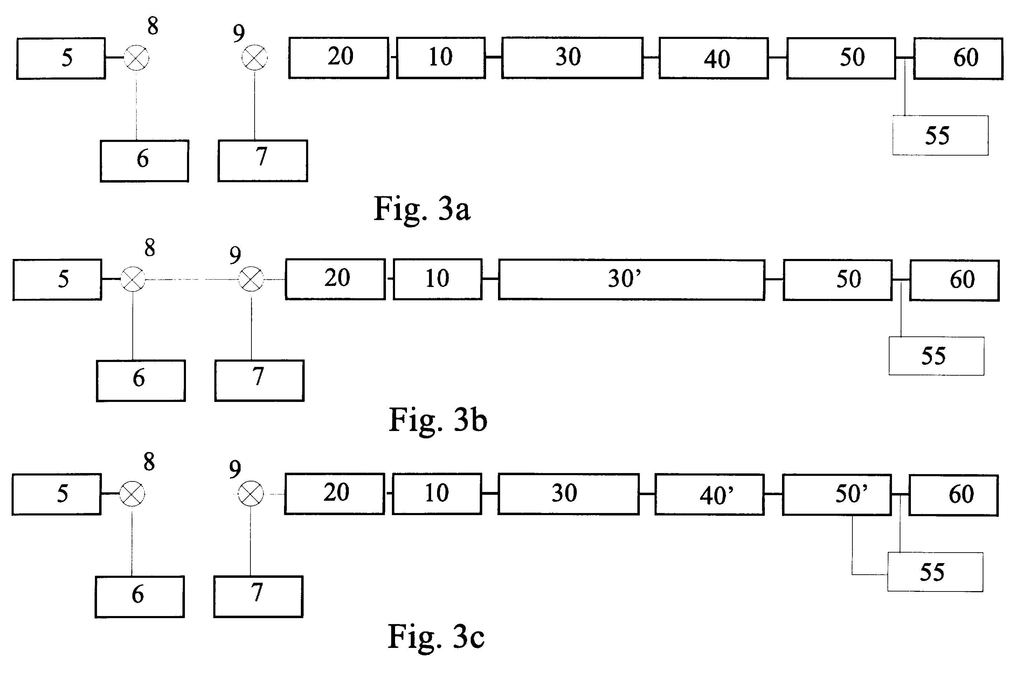

Die Empfängerschaltungen gemäß Fig. 1 und gemäß Fig. 3 stimmen weitgehend überein, so daß sich eine neuerliche detaillierte Beschreibung der Empfängerschaltungen gemäß Fig. 3, was die bereits vorstehend anhand der Fig. 1 erläuterten Komponenten betrifft, erübrigen kann. Es sei nur kurz zum leichteren Verständnis wiederholt, daß das im Eingangskreis auf die Zwischenfrequenz von beispielsweise 10,7 MHz heruntergemischte Empfangssignal (nach den Mischstufen 8, 9) durch das Prä-Detektionsfilter 20 zur Verringerung von Nachbarkanalstörungen und Rauschen geleitet wird und sodann dem optionalen Begrenzer 10 zugeführt wird, um dort in bekannter Weise die Signalamplitude zu begrenzen. Der Frequenzdetektor 30 wandelt sodann wie erwähnt die die Information beinhaltende Momentanfrequenz in Amplitudenwerte um. In einem verzerrungsfreien Kanal treten (ohne Prä-Detektionsfilter) bei binärer FSK nur zwei Amplitudenwerte, entsprechend "+1" und "-1", auf.

Überschreitungen der Amplitudenwerte, die zu falschen Entscheidungen führen könnten, werden gemäß Figur 3a durch einen dem Frequenzdetektor 30 nachgeschalteten Begrenzer 40 begrenzt, der die Signalamplitude begrenzt.

Danach wird in dem fakultativen Post-Detektionsfilter 50 eine weitere Filterung durchgeführt, wonach das Signal, mit entsprechender Abtastung, vgl. den Block 55, dem Verarbeitungsschaltkreis bzw. Entscheider 60 zugeführt wird.

Der Effekt des Begrenzers 40 ergibt sich aus dem Diagramm gemäß Fig. 2, und zwar aus der dort eingezeichneten Kurve 2 für die normierte Momentanfrequenz $f(t)/f_d$ als Funktion von $\tau = t/T$. Es werden dabei dieselben Voraussetzungen wie für die Kurve 1 getroffen, wie sie bereits vorstehend erläutert wurden. Gemäß Fig. 3a wird nun im Vergleich zur Schaltung gemäß Fig. 1 durch den Begrenzer 40 das Ausgangssignal des Frequenzdetektors 30 auf den Bereich [-A, A] beschränkt, wobei A die Ausgangsspannung (z.B. A=0,75V) des Frequenzdetektors 30 ist, wenn an seinem Eingang eine nominelle Frequenzabweichung $f_d$ anliegt, und dies führt dazu, daß das Integral der Momentanfrequenz über eine Bit-Dauer positiv ist, solange nur - gemäß der vorstehenden Beziehung-die Verzögerung $\tau_2$ des zweiten Pfades gegenüber dem ersten Pfad kleiner als die halbe Symboldauer T ist, also $\tau_2 < T/2$; demgemäß kann dann der nachfolgende Entscheider 60 auch immer die richtige Entscheidung - "+1" oder "-1" - fällen.

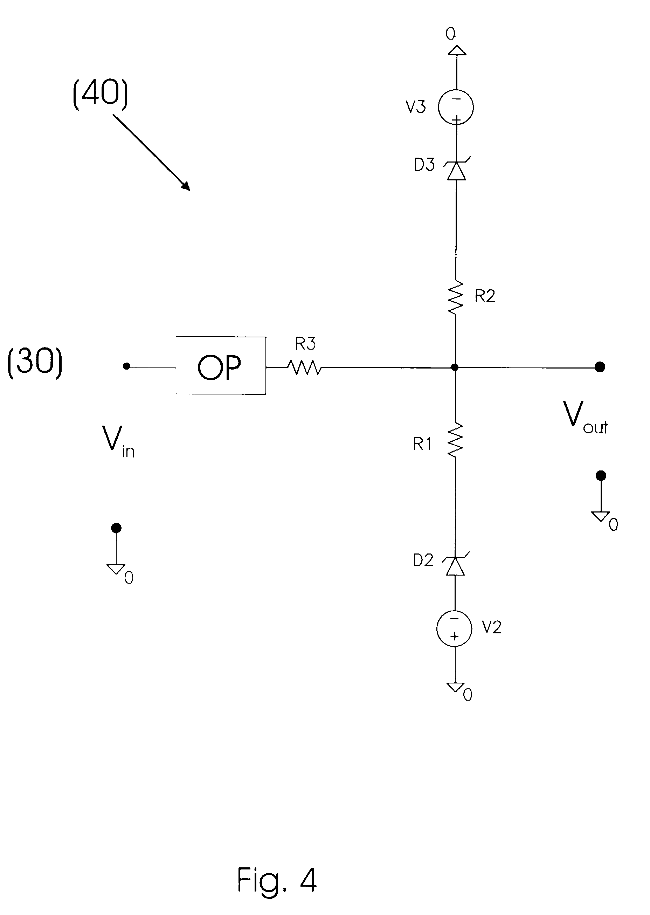

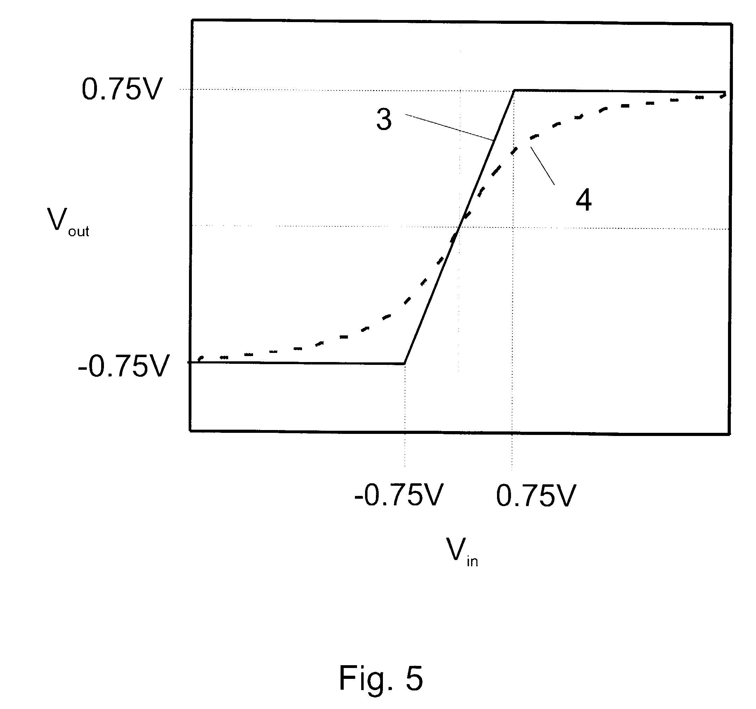

Eine mögliche Ausführungsform des Begrenzers 40 ist mehr im Detail in Fig.4 dargestellt. Das Ausgangssignal (V in in Fig.4) des FM/AM-Konverters, d.h. des Frequenzdetektors 30 in Fig.3a, wird mit Hilfe eines Operationsverstärkers OP im linearen Berieb, soweit verstärkt, daß es $\pm V_1$ (z.B. $\pm$ 0,75V) beträgt, falls die Instantanfrequenz den nominalen Wert $\pm f_d$ annimmt. Dieses Signal wird nun an ein Netzwerk gelegt, das zwei Zenerioden D2, D3 und drei Widerstände R1, R2, R3 enthält; die Zenerdioden D2, D3 werden bei Überschreiten einer Durchbruchspannung (z.B. 2,5V) leitend. Die Zenerdioden D2, D3 und die Werte der zur Festlegung der Dämpfungscharakteristik vorgesehenen Widerstände R1, R2 und R3 im Begrenzer 40 werden so gewählt, daß das Schalten der Zenerdioden D2, D3 schneller als mit 10ns erfolgen kann. Dies impliziert typischerweise Kapazitäten der Zenerdioden D2, D3, die kleiner als 10pF sein müssen. Außerem sollte die Durchbruchskennlinie der Zenerdioden D2, D3 mögichst steil sein; jede Abweichung von der "Idealkennlinie", die in Fig.5 bei 3 veranschaulicht ist, führt zu einer Erhöhung der Fehlerwahrscheinlichkeit.

In Fig.4 sind weiters symbolisch noch Gleichspannungsquellen V2, V3 angedeutet, die die einen Klemmen der Zenerdioden D2, D3 auf eine geeignete Spannung (gegenüber Masse) bringen, wie z.B. je auf 1,75V. Schließlich ist in Fig.4 die Ausgangsspannung mit $v_{out}$ bezeichnet.

Alternative Realisierungen des Begrenzers 40 sind Netzwerke aus Dioden, mit denen sich näherungsweise beliebige Eingangs/Ausgangskennlinien realisieren lassen (s. das oben zitierte Buch von Tietze/ Schenk), und die Verwendung eines Differenzverstärkers, der als Eingangs/Ausgangskennlinie

$$out=K_1 \arctan (in{*}K_2)$$

besitzt. Dies nähert die ideale Kennlinie recht gut an, wie in Fig.5 bei 4 ersichtlich ist. Sowohl die Konstruktion eines Diodennetzwerkes für beliebige Kennlinien als auch Schaltbilder für Differenzverstärker finden sich in der Fachliteratur.

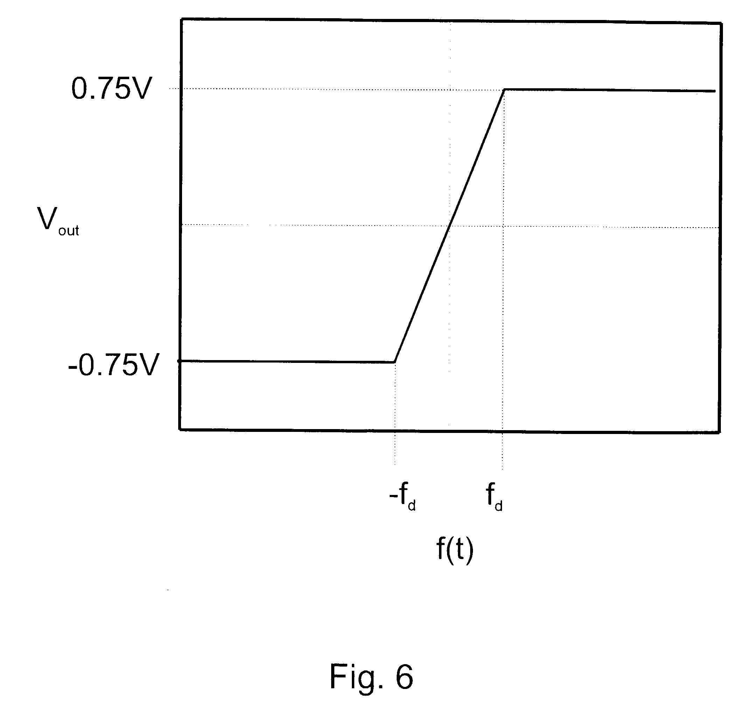

Eine besonders sparsame Ausführungsform der Erfindung ergibt sich, wenn ein Frequenzdetektor 30' (s. Fig.3b) mit nichtlinearer Kennlinie eingesetzt und somit die Begrenzerfunktion im Frequenzdetektor 30' selbst realisiert wird. Auf den gesonderten Begrenzer 40 gemäß Fig.3a kann dann verzichtet werden, d.h. der nichtlineare Frequenzdetektor 30' gemäß Fig.3b ersetzt dann die Komponenten 30 und 40 in Fig.3a. Idealerweise hat ein solcher Frequenzdetektor 30' eine lineare Kennlinie im Bereich [-fd, fd] und außerhalb dieses Bereichs ein konstantes Ausgangssignal mit zwei Werten, die seinen Werten bei -fd und bei fd entsprechen, s. die Kennlinie gemäß Fig.6.

Eine weitere vorteilhafte Ausführungsform ergibt sich in (teil)digitalisierten Empfängern dadurch, daß der Begrenzer als Analog-Digital-Umsetzer (ADU) 40' ausgeführt ist, wie dies in Fig.3c schematisch angedeutet ist. Eine geringe Dynamik von wenigen, etwa nur einem einzigen Bit Auflösung des ADU 40' erfüllt die Begrenzerfunktion in hervorragender Weise. Solche ADUs sind außerdem billig. In diesem Fall wird also der Begrenzer 40' durch einen Analog-Digital-Wandler gebildet, bei dem die Werte mit einer Taktfrequenz ausgelesen werden, die deutlich (mindestens Faktor 10) über der Symbolrate (1,152 MHz) liegt. Außerdem muß sichergestellt sein, daß der Ausgang des FM/AM-Konverters 30 symmetrisch zur Quantisierungsschwelle des AD-Wandlers 40' ist. Das Tiefpaßfilter 50 in Fig.3a wird dann durch eine digitale Recheneinheit 50' ersetzt, d.h. durch einen digitalen Summierer, die bzw. der die Abtastwerte, die innerhalb einer Bitdauer fallen, aufsummiert, und die bzw. der anschließend auf 0 gesetzt wird.

Nachfolgend soll noch eine Möglichkeit zur Berechnung der Fehlerwahrscheinlichkeit bei Empfängern der hier in Rede stehenden Art erläutert werden.

Die Wahl der Bandbreite des Empfangsfilters 20 hängt wesentlich von der Umgebung ab, in der der Empfänger eingesetzt werden soll. Um die optimale Bandbreite zu ermitteln, bedarf es einer Berechnungsvorschrift für die Fehlerwahrscheinlichkeit BER. Wenn hier eine vereinfachte Methode hierfür angegeben wird, so sei doch betont, daß es sich nur um eine beispielhafte Darstellung handelt, und daß andere bekannte Berechnungesmethoden, z.B. Monte Carlo-Simulationen, ebenfalls möglich sind.

Für die Abschätzung der Fehlerwahrscheinlichkeit wird angenommen, daß die Impulsantwort des Kanals

$$h(t)=a_1 \delta(t)+a_2 \delta(t-\tau_2)\exp(j\varphi)\exp(j\Omega t)$$

beträgt, wobei $a_1$ und $a_2$ Rayleigh-verteilte Zufallsvariablen sind; $\varphi$ eine zwischen 0 und $2\pi$ gleichverteilte Zufallsvariable ist; und $\Omega$ eine Frequenzverschiebung ist, die z.B. aufgrund der Dopplerverschiebung durch bewegte Sender, Empfänger, oder Streuer zustandekommen kann. Weiters wird angenommen, daß der Kanal während mehrerer Bitdauern konstant bleibt. Die Kennlinie des Begrenzers 40 wird mit

$$\texttt{out=}\Xi\texttt{(in)}$$

beschrieben. Die Instantanfrequenz, somit die Amplitude am Ausgang des FM/AM-Konverters 30, kann nun als

$$f(t)=\frac{f_a(t)+f_b(t)}{2}+\frac{\frac{1-c(t)^2}{2}\Delta f(t)-\frac{1}{2\pi}\frac{dc(t)}{dt}\sin(\Delta\varphi(t))}{1+2c(t)\cos(\Delta\varphi(t))+c^2(t)}$$

beschrieben werden, wobei

$$f_a(t) = \frac{1}{2\pi}\frac{d\alpha(t)}{dt} \; ;$$

$$f_b(t) = \frac{1}{2\pi}\frac{d\beta(t)}{dt} \; ;$$

$$c(t) = \frac{b(t)}{a(t)} \; ;$$

$$\Delta f(t) = f_a(t) - f_b(t) \; ;$$

und

$$\Delta\varphi(t) = \alpha(t) - \beta(t)$$

ist. Dabei sind a(t) und b(t) die Amplituden, und $\alpha(t)$ und $\beta(t)$ die Phasen vom ersten bzw. zweiten Echo (d.h. Signalanteile, die mit einer Verzögerung 0 bzw. $\tau_2$ ankommen).

Der Wert des Signals, das bei der Abtastung ermittelt wird (s. Block 55 in Fig.3), kann nun als

$$r(t_s) = \frac{1}{T}\int_{-\infty}^{\infty} \Xi(f(t))h_{lf}(t_s - t)dt$$

angegeben werden, wobei T die Bitdauer; $h_{lf}(t)$ die Impulsantwort des Tiefpaßfilters; und $t_s$ der (normierte) Abtastzeitpunkt ist. Beachtenswert ist, daß für ein Integrate-and-dump-Filter $h_{lf}(t)$ ein Rechteckimpuls der Länge T ist. Zur Ermittlung der Fehlerwahrscheinlichkeit BER werden nun jene Werte $\varphi(0)$ bestimmt, für die (bei fixiertem c und übertragenem Symbol "+1") der Wert r($t_s$) kleiner ist als der Schwellwert des Entscheiders 60. Der "Support" dieser Werte wird nun mit $\Delta\varphi_0$ (c) bezeichnet. Die gesamte Fehlerwahrscheinlichkeit BER läßt sich nun als

$$BER = \frac{1}{2\pi}\int_0^{\infty} \Delta\varphi_0(c)\,pdf(c)\,dc$$

berechnen, wobei pdf(c) die Wahrscheinlichkeitsdichteverteilung des Amplitudenverhältnisses c beschreibt.

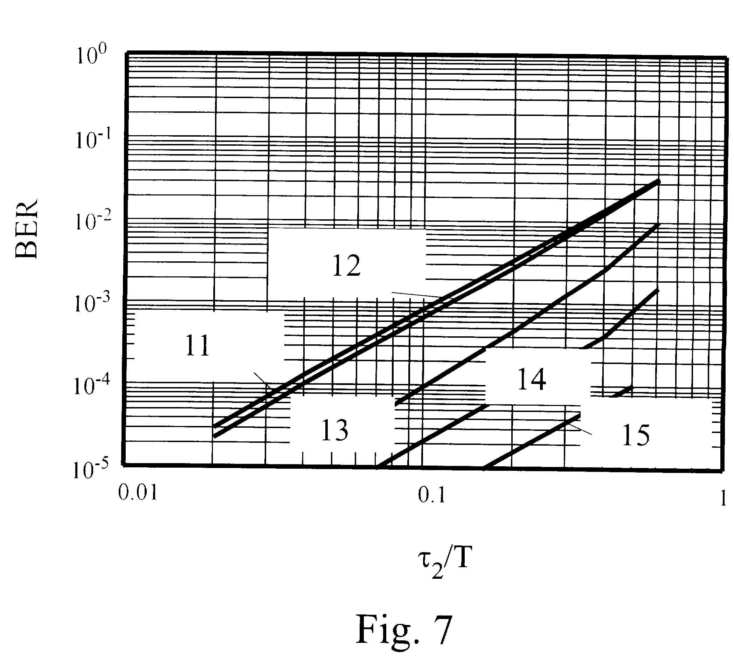

Das Diagramm von Fig.7 veranschaulicht nun eine theoretische Vorhersage der Fehlerwahrscheinlichkeit BER aufgrund von Intersymbolinterferenz für FSK mit Modulationsindex h=0,5 für verschiedene Bandbreiten BT des Prä-Detektionsfilters 20; als Post-Detektorfilter 50 wird ein Integrate-and-dump-Filter angenommen. Der Wert auf der Abszisse in Fig.7 ist die (auf die Bitdauer) normierte Verzögerung des zweiten Pfades. Dabei zeigen die Kurven 11 (Bandbreite BT=0,75) und 12 (Bandbreite BT=10) die Fehlerwahrscheinlichkeit BER bei konventionellen Empfängern an; die Kurven 13 (für BT=0,75), 14 (für BT=1,25) und 15 (für BT=1,75) veranschaulichen die Situation bei Anwendung der erfindungsgemäßen Begrenzungstechnik. Man sieht hieraus deutlich die vergleichsweise niedrige Fehlerwahrscheinlichkeit mit dem erfindungsgemäßen Empfänger, verglichen mit einem herkömmlichen Empfänger.

**Patentansprüche**

1. Empfänger für FSK-Signale mit einem Eingangskreis (5, 6, 7, 8, 9), einem die Momentanfrequenz erfassenden Frequenzdetektor (30, 30') und einem Verarbeitungsschaltkreis (60), dadurch gekennzeichnet, daß die Instantanfrequenz des empfangenen Signals vor der Zuführung zum Verarbeitungsschaltkreis begrenzt wird.

2. Empfänger nach Anspruch 1, dadurch gekennzeichnet, daß das Ausgangssignal des Frequenzdetektors (30) einem Begrenzer (40;40') zugeführt wird, der die Signalamplitude begrenzt.

3. Empfänger nach Anspruch 2, dadurch gekennzeichnet, daß dem Begrenzer (40) ein Filter (50), z. B. ein Tiefpaßfilter oder ein Integrate-and-dump-Filter, nachgeschaltet ist.

4. Empfänger nach Anspruch 1, dadurch gekennzeichnet, daß der Frequenzdetektor (30') eine die Momentanfrequenz begrenzende nichtlineare Kennlinie besitzt.

5. Empfänger nach Anspruch 4, dadurch gekennzeichnet, daß dem Frequenzdetektor (30') mit nichtlinearer Kennlinie ein Filter (50), z.B. ein Tiefpaßfilter oder ein Integrate-and-dump-Filter, nachgeschaltet ist.

6. Empfänger nach Anspruch 2, dadurch gekennzeichnet, daß der Begrenzer (40') als Analog-Digital-Umsetzer mit verringerter Dynamik ausgeführt ist.

7. Empfänger nach Anspruch 6, dadurch gekennzeichnet, daß dem Analog-Digital-Umsetzer (40') eine die Abtastwerte innerhalb einer Bitdauer aufsummierende Recheneinheit (50') nachgeschaltet ist.

Fig. 1

Fig. 2

EP 0 899 922 A2

```
┌─────┐  ⊗ 8      9 ⊗  ┌──────┬──────┬────────┬────────┬────────┬──────┐
│  5  │──⊗          ⊗──│  20  │  10  │   30   │   40   │   50   │  60  │
└─────┘                └──────┴──────┴────────┴────────┴────────┴──┬───┘
          ┊              │                                         │
        ┌─────┐       ┌─────┐                              ┌───────┴───┐
        │  6  │       │  7  │                              │    55     │
        └─────┘       └─────┘                              └───────────┘
```

**Fig. 3a**

```
┌─────┐  ⊗ 8      9 ⊗  ┌──────┬──────┬───────────────────────┬──────┬──────┐
│  5  │──⊗ ─ ─ ─ ─ ⊗──│  20  │  10  │          30'          │  50  │  60  │
└─────┘    │         │ └──────┴──────┴───────────────────────┴──────┴──┬───┘
           │         │                                                 │
        ┌─────┐   ┌─────┐                                     ┌─────────┴─┐
        │  6  │   │  7  │                                     │    55     │
        └─────┘   └─────┘                                     └───────────┘
```

**Fig. 3b**

```
┌─────┐  ⊗ 8      9 ⊗  ┌──────┬──────┬────────┬────────┬────────┬──────┐
│  5  │──⊗          ⊗─ ─│  20  │  10  │   30   │   40'  │   50'  │  60  │
└─────┘    │         │  └──────┴──────┴────────┴────────┴───┬────┴──┬───┘
           │         │                                      │       │
        ┌─────┐   ┌─────┐                              ┌────┴───────┴─┐
        │  6  │   │  7  │                              │      55      │
        └─────┘   └─────┘                              └──────────────┘
```

**Fig. 3c**

Fig. 4

Fig. 5

Fig. 6

Fig. 7

$\tau_2/T$

BER